# EUROPÄISCHE PATENTSCHRIFT

(11) **EP 3 227 673 B1**
(45) Veröffentlichungstag und Bekanntmachung des Hinweises auf die Patenterteilung: **10.04.2019**
(21) Anmeldenummer: 15778971.0
(22) Anmeldetag: 13.10.2015
(51) Int. Cl.: G01N 27/407

(54) **VORRICHTUNG ZUM ERFASSEN EINES GASES UND VERFAHREN ZUM HERSTELLEN DERSELBEN**
DEVICE FOR SENSING A GAS AND METHOD FOR PRODUCING SAME
DISPOSITIF PERMETTANT DE DÉTECTER UN GAZ ET PROCÉDÉ DE FABRICATION DUDIT DISPOSITIF

(30) Priorität: 01.12.2014 DE 102014224510
(43) Veröffentlichungstag der Anmeldung: 11.10.2017
(73) Patentinhaber: Robert Bosch GmbH, 70442 Stuttgart (DE)
(72) Erfinder: KUNZ, Denis, 74199 Untergruppenbach (DE); ROELVER, Robert, 75365 Calw-Stammheim (DE)
(86) Internationale Anmeldenummer: PCT/EP2015/073694
(87) Internationale Veröffentlichungsnummer: WO 2016/087102

(56) Entgegenhaltungen:
- EP-A1- 2 312 306
- DE-A1-102012 201 304
- US-A1- 2009 130 437

## Beschreibung

### Stand der Technik

Die vorliegende Erfindung bezieht sich auf eine Vorrichtung zum Erfassen eines Gases und auf ein Verfahren zum Herstellen einer Vorrichtung zum Erfassen eines Gases, insbesondere für eine Anwendung für eine Abgassensorik in Kraftfahrzeugen, für eine Abgassensorik in stationären Heizanlagen, für Brandmeldesysteme, für eine Gassensorik in Mobiltelefonen, für eine Atemgasanalyse, zur industriellen Prozessüberwachung oder dergleichen.

Beispielsweise können Sauerstoffsensoren auf Basis eines Festelektrolyten mittels Siebdruck- oder Dickschichttechnologie gefertigt und insbesondere als Lambda-Sprungsonden in Kraftfahrzeugen betrieben werden. Zur Messung eines Sauerstoffgehalts innerhalb eines Messgases kann hierbei lediglich eine Sauerstoffionen leitende Funktionskeramik den Messgasraum gegenüber einem Referenzluftraum trennen.

Die DE 10 2012 201 304 A1 offenbart eine mikromechanische Feststoffelektrolyt-Sensorvorrichtung und ein entsprechendes Herstellungsverfahren.

Aus der EP 2 312 306 A1 ist ein Gassensor auf Keramikbasis bekannt.

Aus der US 2009/0130437 A1 ist ebenfalls ein Gassensor auf Keramikbasis bekannt.

### Offenbarung der Erfindung

Vor diesem Hintergrund werden mit dem hier vorgestellten Ansatz eine Vorrichtung zum Erfassen eines Gases und ein Verfahren zum Herstellen einer Vorrichtung zum Erfassen eines Gases gemäß den Hauptansprüchen vorgestellt. Vorteilhafte Ausgestaltungen ergeben sich aus den jeweiligen Unteransprüchen und der nachfolgenden Beschreibung. Gemäß Ausführungsformen der vorliegenden Erfindung kann insbesondere ein Gassensor, beispielsweise ein Sauerstoffsensor, mit Referenzluftraum ohne Dünnschichtmembran bzw. membranfrei und in miniaturisierter Form bereitgestellt werden. Es kann insbesondere eine zwischen Referenzraum und Messraum vorhandene Materialstärke eines Gassensors erhöht werden bzw. ein Gassensor hinsichtlich einer mechanischen Trennung zwischen Referenzraum und Messraum mechanisch verstärkt werden. Anders ausgedrückt kann beispielsweise ein Chipdesign eines miniaturisierten Sauerstoffsensors mit Referenzluftraum ohne Dünnschichtmembran bzw. eines membranfreien miniaturisierten Sauerstoffsensors realisiert werden.

Vorteilhafterweise kann gemäß Ausführungsformen der vorliegenden Erfindung insbesondere eine mechanische Robustheit der Erfassungsvorrichtung bzw. des Gassensors bzw. des Sensorchips verbessert werden. Somit kann eine Widerstandsfähigkeit gegenüber Druckdifferenzen und Druckschwankungen verbessert werden, denen die Erfassungsvorrichtung ausgesetzt sein kann. Es kann also verhindert werden, dass ein Ausfall der Erfassungsvorrichtung bzw. ein Verlust der Sensorfunktion aufgrund eines Berstens von gegenüber Druckdifferenzen und Druckschwankungen empfindlichen Dünnschichtmembranen droht. Es wird anstelle dessen ein Chipdesign verwendet, das ohne Dünnschichtmembran auskommt. Hierdurch kann die Erfassungsvorrichtung bzw. der Sensorchip insbesondere auch für den Einsatz in einem Abgasstrang eines Kraftfahrzeugs ertüchtigt werden. Mit dem hierin gezeigten Chipdesign kann eine Druckbelastbarkeit der Erfassungsvorrichtung verbessert werden.

Insbesondere kann die Erfassungsvorrichtung als ein Sauerstoffsensor auf Basis eines Festelektrolyten beispielsweise mittels Siebdrucktechnologie bzw. Dickschichttechnologie gefertigt und beispielsweise als Lambda-Sprungsonde betrieben werden. Um einen solchen Sensor bzw. eine solche Erfassungsvorrichtung zu miniaturisieren, kann eine Herstellung mittels mikrosystemtechnischer Halbleiterprozesse erfolgen. Hierbei kann beispielsweise ein Halbleitermaterial, z. B. Silizium, als Substrat für eine Dünnschichtmembran aus einer Sauerstoffionen leitenden Funktionskeramik dienen. Gemäß Ausführungsformen der vorliegenden Erfindung kann jedoch hierbei verhindert werden, dass eine solche Dünnschichtmembran durch Druckdifferenzen bzw. Druckschwankungen zwischen einem Messgasraum und einem Referenzluftraum beschädigt oder zerstört würde. Insbesondere ein Einsatz der Erfassungsvorrichtung in einem Abgasstrang eines Kraftfahrzeugs kann somit aufgrund der gegenüber Druckschwankungen robuster ausgeführten Erfassungsvorrichtung ermöglicht werden.

Es wird eine Vorrichtung zum Erfassen eines Gases vorgestellt, wobei die Vorrichtung folgende Merkmale aufweist:
eine Zwischenschicht aus einem Festelektrolyten, wobei die Zwischenschicht eine erste Hauptoberfläche und eine von der ersten Hauptoberfläche abgewandte, zweite Hauptoberfläche aufweist;

eine erste Verstärkungsschicht, die auf Seiten der ersten Hauptoberfläche der Zwischenschicht angeordnet ist, wobei in der ersten Verstärkungsschicht zumindest ein erster Ausnehmungsabschnitt ausgeformt ist;

eine zweite Verstärkungsschicht, die auf Seiten der zweiten Hauptoberfläche der Zwischenschicht angeordnet ist, wobei in der zweiten Verstärkungsschicht zumindest ein zweiter Ausnehmungsabschnitt ausgeformt ist, der entlang der Zwischenschicht mindestens partiell versetzt von dem zumindest einen ersten Ausnehmungsabschnitt der ersten Verstärkungsschicht angeordnet ist;

zumindest eine Messelektrode zum Erfassen des Gases in einem Messmedium, wobei die zumindest eine Messelektrode dem Messmedium zuwendbar an der Zwischenschicht in dem zumindest einen ersten Ausnehmungsabschnitt der ersten Verstärkungsschicht aufgebracht ist; und

zumindest eine Referenzelektrode zum Erfassen des Gases in einem Referenzmedium, wobei die zumindest eine Referenzelektrode dem Referenzmedium zuwendbar an der Zwischenschicht in dem zumindest einen zweiten Ausnehmungsabschnitt der zweiten Verstärkungsschicht aufgebracht ist.

Die Vorrichtung kann ausgebildet sein, um das Gas qualitativ und zusätzlich oder alternativ quantitativ zu erfassen. Bei dem Gas kann es sich beispielsweise um Sauerstoff handeln. Die Zwischenschicht kann beispielsweise planar ausgeformt sein. Hierbei kann die Zwischenschicht eine Haupterstreckungsebene aufweisen. Alternativ kann die Zwischenschicht auch zumindest teilweise gekrümmt ausgeformt sein. Die Verstärkungsschichten sind ausgebildet, um die Zwischenschicht mechanisch zu verstärken bzw. zu stabilisieren bzw. vor mechanischer Belastung zu schützen.

Gemäß einer Ausführungsform kann die zumindest eine Messelektrode bezüglich der Zwischenschicht mindestens partiell gegenüberliegend zu einem Volumenabschnitt der zweiten Verstärkungsschicht außerhalb des zumindest einen zweiten Ausnehmungsabschnitts angeordnet sein. Hierbei kann die zumindest eine Referenzelektrode bezüglich der Zwischenschicht mindestens partiell gegenüberliegend zu einem Volumenabschnitt der ersten Verstärkungsschicht außerhalb des zumindest einen ersten Ausnehmungsabschnitts angeordnet sein. Hierbei kann der Volumenabschnitt der ersten Verstärkungsschicht von dem ersten Ausnehmungsabschnitt entlang der Zwischenschicht benachbart oder beabstandet angeordnet sein. Auch kann der Volumenabschnitt der zweiten Verstärkungsschicht von dem zweiten Ausnehmungsabschnitt entlang der Zwischenschicht benachbart oder beabstandet angeordnet sein. Somit sind die zumindest eine Messelektrode und die zumindest eine Referenzelektrode bezüglich der Zwischenschicht mindestens partiell versetzt zueinander angeordnet. Eine solche Ausführungsform bietet den Vorteil, dass eine mechanische Stabilität bzw. Robustheit der Vorrichtung insbesondere im Bereich von Messelektrode und Referenzelektrode erhöht werden. Somit kann die Vorrichtung auch bei Anwendungen zum Einsatz kommen, bei denen Druckbelastungen und/oder Druckschwankungen auftreten.

Auch kann ein lonenflussweg zwischen der zumindest einen Messelektrode und der zumindest einen Referenzelektrode in der Zwischenschicht zumindest teilweise entlang der Zwischenschicht verlaufen. Insbesondere kann der lonenflussweg hierbei zumindest teilweise entlang einer Haupterstreckungsebene der Zwischenschicht verlaufen, wobei die Zwischenschicht planar ausgeformt sein kann. Eine solche Ausführungsform bietet den Vorteil, dass auch bei versetzter Anordnung der Elektroden ein geeignet dimensionierter lonenstrom bzw. Ionenfluss ermöglicht werden kann.

Ferner kann der zumindest eine erste Ausnehmungsabschnitt in der ersten Verstärkungsschicht länglich entlang der Zwischenschicht ausgeformt sein. Entsprechend kann der zumindest eine zweite Ausnehmungsabschnitt in der zweiten Verstärkungsschicht länglich entlang der Zwischenschicht ausgeformt sein. Hierbei kann mindestens eine erste Seitenabmessung des zumindest einen ersten Ausnehmungsabschnittes und zusätzlich oder alternativ des zumindest einen zweiten Ausnehmungsabschnittes eine zweite Seitenabmessung sein. Eine solche Ausführungsform bietet den Vorteil, dass eine für einen lonenstrom verfügbare Fläche vergrößert werden kann.

Insbesondere kann in der ersten Verstärkungsschicht ein entlang der Zwischenschicht mäanderförmiger, erster Ausnehmungsabschnitt ausgeformt sein. Hierbei kann in der zweiten Verstärkungsschicht ein entlang der Zwischenschicht mäanderförmiger, zweiter Ausnehmungsabschnitt ausgeformt sein. Dabei kann der erste Ausnehmungsabschnitt als ein zusammenhängender Ausnehmungsabschnitt ausgeformt sein und kann der zweite Ausnehmungsabschnitt als ein zusammenhängender Ausnehmungsabschnitt ausgeformt sein. Insbesondere können der erste Ausnehmungsabschnitt und der zweite Ausnehmungsabschnitt versetzte Abschnitte, in denen der erste Ausnehmungsabschnitt und der zweite Ausnehmungsabschnitt entlang der Zwischenschicht voneinander versetzt angeordnet sind, und Überlappungsabschnitte aufweisen, in denen der erste Ausnehmungsabschnitt und der zweite Ausnehmungsabschnitt bezüglich der Zwischenschicht einander überlappend bzw. gegenüberliegend angeordnet sind. Hierbei können die Überlappungsabschnitte eine geringere Fläche, insbesondere eine um ein Vielfaches geringere Fläche, als die versetzten Abschnitte aufweisen. Eine solche Ausführungsform bietet den Vorteil, dass selbst bei Ausformung lediglich eines Elektrodenpaars eine für einen lonenstrom verfügbare Fläche vergrößert werden kann und somit Erfassungseigenschaften der Vorrichtung verbessert werden können.

Gemäß einer Ausführungsform kann die erste Verstärkungsschicht eine Passivierungsschicht aufweisen. Hierbei kann die zweite Verstärkungsschicht ein Trägersubstrat aufweisen. Eine solche Ausführungsform bietet den Vorteil, dass die Vorrichtung somit unaufwendig und unkompliziert herstellbar ist.

Dabei kann die Passivierungsschicht gasdicht ausgeführt sein. Das Trägersubstrat kann aus einem Halbleitermaterial ausgeformt sein. Eine solche Ausführungsform bietet den Vorteil, dass aus mittels Standardprozessen und zusätzlich oder Alternativstandardwerkzeugen bearbeitbaren Materialien die Verstärkungsschichten der Vorrichtung kostengünstig hergestellt werden können.

Auch kann eine Ätzstoppschicht vorgesehen sein, die außerhalb des zumindest einen zweiten Ausnehmungsabschnitts an der zweiten Verstärkungsschicht angeordnet ist. Eine solche Ausführungsform bietet den Vorteil, dass der zumindest eine zweite Ausnehmungsabschnitt in der zweiten Verstärkungsschicht auf besonders einfache und hinsichtlich einer Position desselben exakt definierte Weise ausformbar ist.

Es wird auch ein Verfahren zum Herstellen einer Vorrichtung zum Erfassen eines Gases vorgestellt, wobei das Verfahren folgende Schritte aufweist:
Anordnen einer ersten Verstärkungsschicht auf Seiten einer ersten Hauptoberfläche einer Zwischenschicht aus einem Festelektrolyten und einer zweiten Verstärkungsschicht auf Seiten einer von der ersten Hauptoberfläche abgewandten, zweiten Hauptoberfläche der Zwischenschicht;

Ausformen zumindest eines ersten Ausnehmungsabschnitts in der ersten Verstärkungsschicht und zumindest eines zweiten Ausnehmungsabschnitts in der zweiten Verstärkungsschicht, sodass der zumindest eine zweite Ausnehmungsabschnitt entlang der Zwischenschicht mindestens partiell versetzt von dem zumindest einen ersten Ausnehmungsabschnitt der ersten Verstärkungsschicht angeordnet ist; und

Aufbringen zumindest einer Messelektrode zum Erfassen des Gases in einem Messmedium in dem zumindest einen ersten Ausnehmungsabschnitt der ersten Verstärkungsschicht dem Messmedium zuwendbar an der Zwischenschicht und zumindest einer Referenzelektrode zum Erfassen des Gases in einem Referenzmedium in dem zumindest einen zweiten Ausnehmungsabschnitt der zweiten Verstärkungsschicht dem Referenzmedium zuwendbar an der Zwischenschicht.

Durch Ausführen des Verfahrens zum Herstellen kann eine Ausführungsform der vorstehend genannten Vorrichtung zum Erfassen eines Gases hergestellt werden.

Gemäß einer Ausführungsform kann im Schritt des Ausformens der zumindest eine erste Ausnehmungsabschnitt und zusätzlich oder alternativ der zumindest eine zweite Ausnehmungsabschnitt mittels eines Ätzprozesses ausgeformt werden. Hierbei kann der Ätzprozess insbesondere ein anisotroper Ätzprozess, ein anisotroper Trockenätzprozess, ein reaktiver Ionenätzprozess oder ein reaktiver lonentiefenätzprozess sein. Hierbei kann ein Querschnittsprofil eines Ausnehmungsabschnittes trapezförmig, quadratisch oder rechteckig sein. Eine solche Ausführungsform bietet den Vorteil, dass eine Anzahl von Ausnehmungsabschnitten und/oder eine Anordnungsdichte von Ausnehmungsabschnitten und/oder eine Elektrodenfläche der Vorrichtung erhöht werden kann bzw. können. Somit können eine Empfindlichkeit und/oder Genauigkeit einer Erfassung des Gases verbessert werden.

Der hier vorgestellte Ansatz wird nachstehend anhand der beigefügten Zeichnungen beispielhaft näher erläutert. Es zeigen:
Fig. 1 eine schematische Schnittdarstellung eines Sauerstoffsensors;
Fig. 2 eine schematische Schnittdarstellung einer Erfassungsvorrichtung gemäß einem Ausführungsbeispiel der vorliegenden Erfindung;
Fig. 3 eine schematische Draufsichtsdarstellung einer Erfassungsvorrichtung gemäß einem Ausführungsbeispiel der vorliegenden Erfindung; und
Fig. 4 ein Ablaufdiagramm eines Verfahrens gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

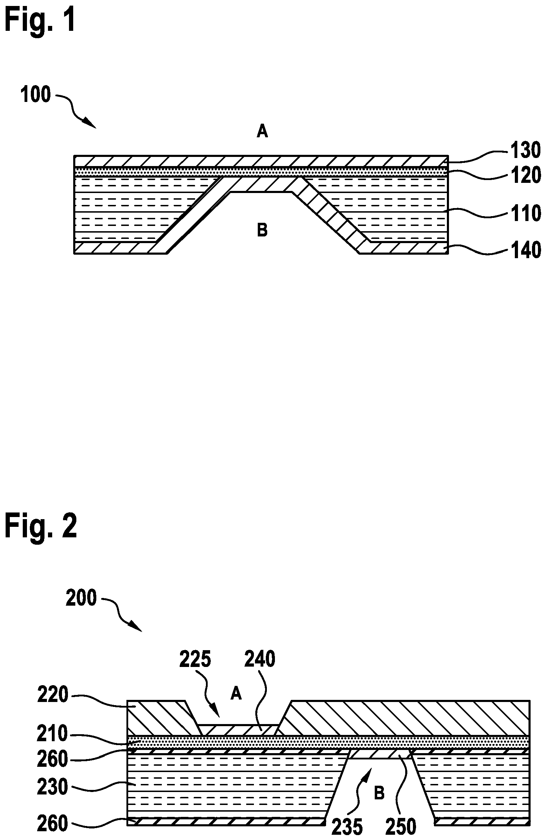

Fig. 1 zeigt eine schematische Schnittdarstellung eines Sauerstoffsensors 100. der Sauerstoffsensor 100 ist in einer Umgebung einsetzbar, in der ein Messgas A und Referenzluft B angeordnet sind. Hierbei ist der Sauerstoffsensor 100 zwischen dem Messgas A und der Referenzluft B angeordnet.

Der Sauerstoffsensor 100 weist ein Trägersubstrat 110 auf. An einer im Betrieb des Sauerstoffsensors 100 dem Messgas A zugewandten Seite des Trägersubstrats 110 ist eine Festelektrolytschicht 120 bzw. Schicht aus einem Festelektrolyten angeordnet. An der Festelektrolytschicht 120 ist eine vorderseitige Elektrode 130 angeordnet. Somit ist die Festelektrolytschicht 120 zwischen dem Trägersubstrat 110 und der vorderseitigen Elektrode 130 angeordnet. An einer der Referenzluft B zugewandten Seite des Trägersubstrats 110 ist eine Rückelektrode 140 angeordnet. Somit ist das Trägersubstrat 110 zwischen der Festelektrolytschicht 120 und der Rückelektrode 140 angeordnet.

Zur Messung des Sauerstoffgehalts innerhalb eines Messgases mittels eines solchen miniaturisierten Sauerstoffsensors 100 soll eine Sauerstoffionen leitende Funktionskeramik den Messgasraum bzw. das Messgas A gegenüber einem Referenzluftraum bzw. der Referenzluft B trennen. In Fig. 1 wird dies mit Hilfe einer mikrosystemtechnisch erzeugten Dünnschichtmembran erreicht, wobei die vorderseitige Elektrode 130 bzw. Messelektrode und die Rückelektrode 140 bzw. Referenzelektrode unmittelbar gegenüberliegend angeordnet sind. Eine Schichtdicke der Dünnschichtmembran liegt hierbei zum Beispiel im Bereich zwischen 100 Nanometer und 1000 Nanometer.

Fig. 2 zeigt eine schematische Schnittdarstellung einer Vorrichtung zum Erfassen eines Gases bzw. einer Erfassungsvorrichtung 200 gemäß einem Ausführungsbeispiel der vorliegenden Erfindung. Anders ausgedrückt ist die Erfassungsvorrichtung 200 ausgebildet, um ein Gas zu erfassen. Gemäß dem in Fig. 2 dargestellten Ausführungsbeispiel der vorliegenden Erfindung handelt es sich bei dem Gas um Sauerstoff. Die Erfassungsvorrichtung 200 ist zwischen einem Messmedium bzw. einem Messgasraum A und einem Referenzmedium bzw. Referenzgasraum B bzw. Referenzluft angeordnet. Mit anderen Worten sind der Messgasraum A und der Referenzgasraum B durch die Erfassungsvorrichtung 200 getrennt. Hierbei enthält der Messgasraum A das Messgas in einem veränderlichen Anteil und enthält der Referenzgasraum B einen im Wesentlichen unveränderlichen Anteil an Messgas. Insbesondere ist es möglich, dass in Fig. 2 lediglich ein Ausschnitt bzw. Teilabschnitt der Erfassungsvorrichtung 200 dargestellt ist.

Die Erfassungsvorrichtung 200 weist eine Zwischenschicht aus einem Festelektrolyten bzw. eine Festelektrolytschicht 210 auf. Die Festelektrolytschicht weist auf Seiten des Messgasraums A eine erste Hauptoberfläche und auf Seiten des Referenzgasraums B eine zweite Hauptoberfläche auf. Die erste Hauptoberfläche und die zweite Hauptoberfläche sind hierbei voneinander abgewandt.

An der ersten Hauptoberfläche der Festelektrolytschicht 210 bzw. auf Seiten des Messgasraums A ist eine erste Verstärkungsschicht in Gestalt einer Passivierungsschicht 220 an der Festelektrolytschicht 210 angeordnet. Hierbei ist gemäß der Darstellung sowie dem Ausführungsbeispiel in Fig. 2 in der Passivierungsschicht 220 beispielhaft lediglich ein erster Ausnehmungsabschnitt 225 bzw. Grabenabschnitt ausgeformt. Der erste Ausnehmungsabschnitt 225 weist ein trapezförmiges Schnittprofil auf, wie es in Fig. 2 erkennbar ist. Das trapezförmiges Schnittprofil ist dabei nur beispielhaft gewählt und kann durch ein anderes geeignetes Profil ersetzt werden. Dabei ist im Bereich des ersten Ausnehmungsabschnittes 225 ein Material der Passivierungsschicht 220 bis zu der Festelektrolytschicht 210 hin entfernt. Außerhalb des ersten Ausnehmungsabschnittes 225 ist ein Volumenabschnitt der Passivierungsschicht 220 angeordnet. In dem Volumenabschnitt weist die Passivierungsschicht 220 eine erste Schichtdicke über der Festelektrolytschicht 210 auf. Die Passivierungsschicht 220 ist gemäß dem in Fig. 2 dargestellten Ausführungsbeispiel der vorliegenden Erfindung gasdicht ausgeführt.

An der zweiten Hauptoberfläche der Festelektrolytschicht 210 bzw. auf Seiten des Referenzgasraums B ist eine zweite Verstärkungsschicht in Gestalt eines Substrates 230 oder Trägersubstrates an der Festelektrolytschicht 210 angeordnet. Hierbei ist gemäß der Darstellung sowie dem Ausführungsbeispiel in Fig. 2 in dem Substrat 230 beispielhaft lediglich ein zweiter Ausnehmungsabschnitt 235 bzw. Grabenabschnitt ausgeformt. Der zweite Ausnehmungsabschnitt 235 weist hier beispielhaft ein trapezförmiges Schnittprofil auf, wie es in Fig. 2 erkennbar ist. Dabei ist im Bereich des zweiten Ausnehmungsabschnittes 235 ein Material des Substrates 230 bis zu der Festelektrolytschicht 210 hin entfernt. Außerhalb des zweiten Ausnehmungsabschnittes 235 ist ein Volumenabschnitt des Substrates 230 angeordnet. In dem Volumenabschnitt weist das Substrat 230 eine zweite Schichtdicke über der Festelektrolytschicht 210 auf. Die zweite Schichtdicke, d. h. die Schichtdicke des Substrates 230, ist größer als die erste Schichtdicke, d. h. die Schichtdicke der Passivierungsschicht 220. Gemäß dem in Fig. 2 dargestellten Ausführungsbeispiel der vorliegenden Erfindung ist das Substrat 230 aus einem Halbleitermaterial ausgeformt.

Der erste Ausnehmungsabschnitt 225, der in der Passivierungsschicht 220 ausgeformt ist, und der zweite Ausnehmungsabschnitt 235, der in dem Substrat 230 ausgeformt ist, sind entlang der Festelektrolytschicht 210 versetzt voneinander angeordnet. Dabei ist der erste Ausnehmungsabschnitt 225 bezüglich der Festelektrolytschicht 210 gegenüberliegend zu dem Volumenabschnitt des Substrates 230 angeordnet, wobei der zweite Ausnehmungsabschnitt 235 bezüglich der Festelektrolytschicht 210 gegenüberliegend zu dem Volumenabschnitt der Passivierungsschicht 220 angeordnet ist.

In dem ersten Ausnehmungsabschnitt 225 ist gemäß dem in Fig. 2 dargestellten Ausführungsbeispiel der vorliegenden Erfindung beispielhaft lediglich eine Messelektrode 240 an der Festelektrolytschicht 210 aufgebracht. Die Messelektrode 240 ist dem Messmedium bzw. Messgasraum A zuwendbar an der Festelektrolytschicht 210 in dem ersten Ausnehmungsabschnitt 225 der Passivierungsschicht 220 aufgebracht. Die Messelektrode 240 ist ausgebildet, um das Messgas in dem Messgasraum A zu erfassen.

In dem zweiten Ausnehmungsabschnitt 235 ist gemäß dem in Fig. 2 dargestellten Ausführungsbeispiel der vorliegenden Erfindung beispielhaft lediglich eine Referenzelektrode 250 an der Festelektrolytschicht 210 aufgebracht. Die Referenzelektrode 250 ist dem Referenzluftraum B zuwendbar an der Festelektrolytschicht 210 in dem zweiten Ausnehmungsabschnitt 235 des Substrates 230 aufgebracht. Die Referenzelektrode 250 ist ausgebildet, um das Gas bzw. Messgas in dem Referenzluftraum B bzw. dem Referenzmedium zu erfassen.

Die Messelektrode 240 ist gemäß dem in Fig. 2 dargestellten Ausführungsbeispiel der vorliegenden Erfindung bezüglich der Festelektrolytschicht 210 somit gegenüberliegend zu dem Volumenabschnitt des Substrates 230 angeordnet, wobei die Referenzelektrode 250 bezüglich der Festelektrolytschicht 210 gegenüberliegend zu dem Volumenabschnitt der Passivierungsschicht 220 angeordnet ist. Somit sind hierbei die Messelektrode 240 und die Referenzelektrode 250 entlang der Festelektrolytschicht 210 voneinander versetzt angeordnet. Daher verläuft ein lonenflussweg zwischen der Messelektrode 240 und der Referenzelektrode 250 in der Festelektrolytschicht 210 zumindest teilweise entlang einer Haupterstreckungsebene der Festelektrolytschicht 210.

Ferner weist die Erfassungsvorrichtung 200 gemäß dem in Fig. 2 dargestellten Ausführungsbeispiel der vorliegenden Erfindung eine Ätzstoppschicht 260 auf. Die Ätzstoppschicht 260 ist hierbei an dem Substrat 230 angeordnet. Genauer gesagt ist die Ätzstoppschicht 260 in Bereichen außerhalb des zweiten Ausnehmungsabschnitts 235 an dem Substrat 230 angeordnet. Hierbei ist die Ätzstoppschicht 260 beidseitig auf das Substrat 230 aufgebracht.

Anders ausgedrückt zeigt Fig. 2 ein mögliches Chipdesign für eine als membranfreier Sensorchip mit Referenzluftraum ausgeführte Erfassungsvorrichtung 200. Messelektrode 240 und Referenzelektrode 250 sind entlang der Festelektrolytschicht 210 versetzt zueinander angeordnet. Bei einem Herstellungsverfahren der Erfassungsvorrichtung 200 wird beispielsweise an einer von der Festelektrolytschicht 210 abgewandten Außenseite des Substrats 230 bzw. auf einer Waferrückseite mikrosystemtechnisch eine Kavität erzeugt, um den zweiten Ausnehmungsabschnitt 235 auszuformen, und wird innerhalb der Kavität ein Elektrodenmaterial für die Referenzelektrode 250 bzw. Rückelektrode aufgebracht. Als Substratmaterial für das Substrat 230 eignen sich beispielsweise Halbleitermaterialien wie Silicium, Siliciumcarbid, Galliumarsenid, Galliumnitrid und/oder dergleichen. Gegenüberliegend zur Referenzelektrode 250 wird die gasdichte, beispielsweise dicke Passivierungsschicht 220 abgeschieden, die den Festelektrolyten der Festelektrolytschicht 210 im Bereich des zweiten Ausnehmungsabschnittes 235 trägert und dadurch mechanisch stabilisiert. Die Passivierungsschicht 230 ist beispielsweise aus Siliciumdioxid, Siliciumnitrid, Siliciumcarbid und/oder dergleichen gefertigt. Eine Dicke der Passivierungsschicht 230 beträgt beispielsweise 0,5 Mikrometer bis mehrere hundert Mikrometer, insbesondere 1 Mikrometer bis 200 Mikrometer. Die Messelektrode 240 wird versetzt zur Referenzelektrode 250 auf der ersten Hauptoberfläche der Festelektrolytschicht 210 in dem ersten Ausnehmungsabschnitt 222 bzw. auf einer Wafervorderseite aufgebracht. Ein Konzentrationsgradient des Sauerstoffpartialdrucks zwischen Messgasraum A und Referenzgasraum B wird über einen Sauerstoffionenstrom durch die Festelektrolytschicht 210 ausgeglichen. Entsprechendes gilt bei Anlegen einer Pumpspannung, d. h. auch in diesem Fall erfolgt ein Sauerstofftransport durch die Festelektrolytschicht 210. Der Sauerstoffionenstrom zwischen der Messelektrode 240 und der Referenzelektrode 250 fließt somit durch die Festelektrolytschicht 210. Die Festelektrolytschicht 210 ist beispielsweise aus yttriumstabilisiertem Zirkonoxid ausgeführt. Eine Dicke der Festelektrolytschicht 210 beträgt beispielsweise 50 Nanometer bis 10 Mikrometer, insbesondere 200 Nanometer bis 1 Mikrometer.

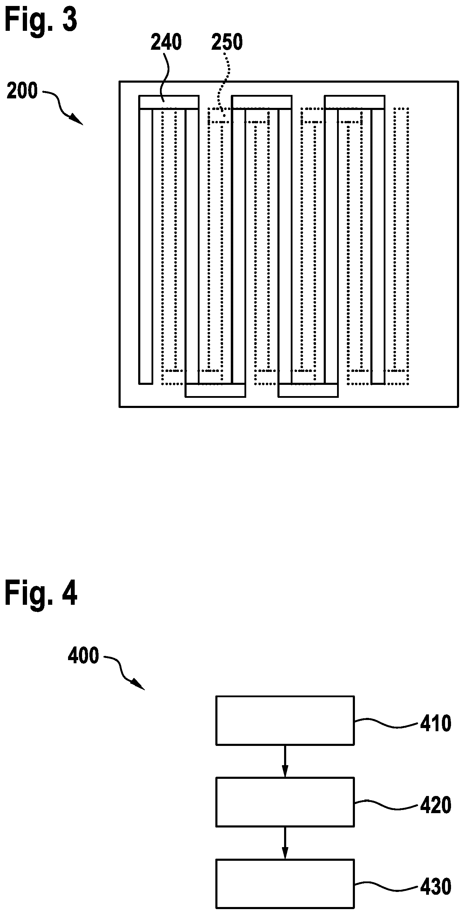

Fig. 3 zeigt eine schematische Draufsichtsdarstellung einer Erfassungsvorrichtung 200 gemäß einem Ausführungsbeispiel der vorliegenden Erfindung. Bei der Erfassungsvorrichtung 200 in Fig. 3 handelt es sich um die in Fig. 2 dargestellte Erfassungsvorrichtung oder eine Erfassungsvorrichtung wie die in Fig. 2 gezeigte Erfassungsvorrichtung. Hierbei ist die Erfassungsvorrichtung 200 in einer Draufsicht auf beispielsweise die Passivierungsschicht 220 dargestellt. Anders ausgedrückt ist die Erfassungsvorrichtung 200 in einer Draufsicht von dem in Fig. 2 gezeigten Messgasraum aus dargestellt. In der Draufsicht von Fig. 1 ist erkennbar, dass die Erfassungsvorrichtung 200 beispielsweise einen rechteckigen oder quadratischen Grundriss aufweist.

In Fig. 3 ist eine zusammenhängende, mäanderförmige Messelektrode 240 gezeigt. Somit ist hierbei in der Passivierungsschicht 220 ein entlang der Festelektrolytschicht mäanderförmiger, erster Ausnehmungsabschnitt ausgeformt, in dem die Messelektrode 240 aufgebracht ist. Zur Veranschaulichung ist in Fig. 3 auch eine zusammenhängende, mäanderförmige Referenzelektrode 250 bzw. deren Position eingezeichnet. Dabei ist die Referenzelektrode 250 in einem entlang der Festelektrolytschicht mäanderförmig ausgeformten, ersten Ausnehmungsabschnitt angeordnet.

Anders ausgedrückt zeigt Fig. 3 eine Draufsicht einer Chipoberseite der Erfassungsvorrichtung 200 mit mäandrierter Struktur der Messelektrode 240 und der Referenzelektrode 250. Eine möglichst hohe lonenleitfähigkeit des Festelektrolyten der Festelektrolytschicht ist insbesondere durch eine Querschnittsfläche bestimmt, durch welche der Sauerstoffionenstrom fließen kann. Während dies herkömmlicherweise durch eine Membranfläche bzw. Elektrodenfläche bestimmt ist, so ist bei einem Chiplayout der Erfassungsvorrichtung 200 eine Querschnittsfläche eines Sauerstoffionenstroms durch eine Schichtdicke der Festelektrolytschicht bestimmt. Beispielsweise ist die Schichtdicke der Festelektrolytschicht kleiner als eine Fläche der Messelektrode 240 und der Referenzelektrode 250. Um eine maximale Querschnittsfläche zwischen der Messelektrode 240 und der Referenzelektrode 250 zu erzielen, ist beispielsweise eine Kantenlänge der Messelektrode 240 und der Referenzelektrode 250 maximiert. Gemäß dem in Fig. 3 dargestellten Ausführungsbeispiel der vorliegenden Erfindung sind die Messelektrode 240 und die Referenzelektrode 250 mäanderförmig über eine gesamte Chipfläche der Erfassungsvorrichtung 200 verteilt angeordnet, sodass die von dem Sauerstoffionenstrom durchflossene Querschnittsfläche innerhalb der Festelektrolytschicht maximiert ist. Um eine möglichst hohe Dichte einer Anordnung von Messelektrode 240, Festelektrolyt und Referenzelektrode 250 auf der Chipfläche integrieren zu können, ist es vorteilhaft, den zweiten Ausnehmungsabschnitt bzw. eine rückseitige Kavität in dem Substrat mittels Trenchprozessen zu fertigen, beispielsweise mittels reaktiver Ionenätzprozesse. Hierdurch können beim KOH-Ätzen auftretende, schräge Kanten bzw. Flanken der Ausnehmungsabschnitte im Halbleitersubstrat vermieden und stattdessen nahezu rechteckige Schnittprofile der Ausnehmungsabschnitte bzw. Kavitäten erzeugt werden. Die Messelektrode 240 und/oder die Referenzelektrode 250 bzw. Rückelektrode ist bzw. sind mittels Abscheidung und Kontaktierung herstellbar.

Gemäß einem Ausführungsbeispiel kann in der Passivierungsschicht zumindest ein erster Ausnehmungsabschnitt ausgeformt sein, wobei in dem Substrat zumindest ein zweiter Ausnehmungsabschnitt ausgeformt sein kann. Der erste Ausnehmungsabschnitt und der zweiter Ausnehmungsabschnitt können hierbei länglich ausgeformt sein.

Fig. 4 zeigt ein Ablaufdiagramm eines Verfahrens 400 gemäß einem Ausführungsbeispiel der vorliegenden Erfindung. Bei dem Verfahren 400 handelt es sich um ein Verfahren zum Herstellen einer Vorrichtung zum Erfassen eines Gases. Durch Ausführen des Verfahrens 400 ist eine Vorrichtung zum Erfassen bzw. Erfassungsvorrichtung wie die Erfassungsvorrichtung aus Fig. 2 bzw. Fig. 3 herstellbar. Anders ausgedrückt ist das Verfahren 400 ausführbar bzw. geeignet, um eine Vorrichtung zum Erfassen bzw. Erfassungsvorrichtung wie die Erfassungsvorrichtung aus Fig. 2 bzw. Fig. 3 herzustellen.

Das Verfahren 400 weist einen Schritt 410 des Anordnens einer ersten Verstärkungsschicht auf Seiten einer ersten Hauptoberfläche einer Zwischenschicht aus einem Festelektrolyten sowie einer zweiten Verstärkungsschicht auf Seiten einer von der ersten Hauptoberfläche abgewandten, zweiten Hauptoberfläche der Zwischenschicht auf.

In einem nachfolgenden Schritt 420 des Ausformens werden zumindest ein erster Ausnehmungsabschnitt in der ersten Verstärkungsschicht und zumindest ein zweiter Ausnehmungsabschnitt in der zweiten Verstärkungsschicht ausgeformt. Hierbei wird der Schritt 420 des Ausformens so ausgeführt, dass der zumindest eine zweite Ausnehmungsabschnitt entlang der Zwischenschicht mindestens partiell versetzt von dem zumindest einen ersten Ausnehmungsabschnitt der ersten Verstärkungsschicht angeordnet ist.

In einem bezüglich des Schrittes 420 des Ausformens nachfolgend ausführbaren Schritt 430 des Aufbringens wird zumindest eine Messelektrode zum Erfassen des Gases in einem Messmedium in dem zumindest einen ersten Ausnehmungsabschnitt der ersten Verstärkungsschicht dem Messmedium zuwendbar an der Zwischenschicht aufgebracht. Ferner wird im Schritt 430 des Aufbringens zumindest eine Referenzelektrode zum Erfassen des Gases in einem Referenzmedium in dem zumindest einen zweiten Ausnehmungsabschnitt der zweiten Verstärkungsschicht dem Referenzmedium zuwendbar an der Zwischenschicht aufgebracht.

Gemäß einem Ausführungsbeispiel werden im Schritt 420 des Ausformens der zumindest eine erste Ausnehmungsabschnitt und zusätzlich oder alternativ der zumindest eine zweite Ausnehmungsabschnitt mittels eines Ätzprozesses ausgeformt. Dabei ist der Ätzprozess optional insbesondere ein anisotroper Ätzprozess, ein anisotroper Trockenätzprozess, ein reaktiver Ionenätzprozess oder ein reaktiver lonentiefenätzprozess.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (200) zum Erfassen eines Gases, wobei die Vorrichtung (200) folgende Merkmale aufweist:
eine Zwischenschicht (210) aus einem Festelektrolyten, wobei die Zwischenschicht (200) eine erste Hauptoberfläche und eine von der ersten Hauptoberfläche abgewandte, zweite Hauptoberfläche aufweist;
eine erste Verstärkungsschicht (220), die auf Seiten der ersten Hauptoberfläche der Zwischenschicht (210) angeordnet ist, wobei in der ersten Verstärkungsschicht (220) zumindest ein erster Ausnehmungsabschnitt (225) ausgeformt ist;
eine zweite Verstärkungsschicht (230), die auf Seiten der zweiten Hauptoberfläche der Zwischenschicht (210) angeordnet ist, wobei in der zweiten Verstärkungsschicht (230) zumindest ein zweiter Ausnehmungsabschnitt (235) ausgeformt ist, der entlang der Zwischenschicht (210) mindestens partiell versetzt von dem zumindest einen ersten Ausnehmungsabschnitt (225) der ersten Verstärkungsschicht (220) angeordnet ist;
zumindest eine Messelektrode (240) zum Erfassen des Gases in einem Messmedium (A), wobei die zumindest eine Messelektrode (240) dem Messmedium (A) zuwendbar an der Zwischenschicht (210) in dem zumindest einen ersten Ausnehmungsabschnitt (225) der ersten Verstärkungsschicht (220) aufgebracht ist; und
zumindest eine Referenzelektrode (250) zum Erfassen des Gases in einem Referenzmedium (B), wobei die zumindest eine Referenzelektrode (250) dem Referenzmedium (B) zuwendbar an der Zwischenschicht (210) in dem zumindest einen zweiten Ausnehmungsabschnitt (235) der zweiten Verstärkungsschicht (230) aufgebracht ist,
wobei die erste Verstärkungsschicht (220) in Gestalt einer Passivierungsschicht (220) an der Festelektrolytschicht (210) angeordnet ist,
wobei die zweite Verstärkungsschicht (230) in Gestalt eines aus einem Halbleitermaterial ausgeformten Substrates (230) oder in Gestalt eines aus einem Halbleitermaterial ausgeformten Trägersubstrates an der Festelektrolytschicht (210) angeordnet ist,
wobei die Vorrichtung (200) mittels mikrosystemtechnischer Halbleiterprozesse gefertigt ist..

2. Vorrichtung (200) gemäß Anspruch 1 oder 2, bei der die zumindest eine Messelektrode (240) bezüglich der Zwischenschicht (210) mindestens partiell gegenüberliegend zu einem Volumenabschnitt der zweiten Verstärkungsschicht (230) außerhalb des zumindest einen zweiten Ausnehmungsabschnitts (235) angeordnet ist, wobei die zumindest eine Referenzelektrode (250) bezüglich der Zwischenschicht (210) mindestens partiell gegenüberliegend zu einem Volumenabschnitt der ersten Verstärkungsschicht (220) außerhalb des zumindest einen ersten Ausnehmungsabschnitts (225) angeordnet ist.

3. Vorrichtung (200) gemäß einem der vorangegangenen Ansprüche, bei der ein lonenflussweg zwischen der zumindest einen Messelektrode (240) und der zumindest einen Referenzelektrode (250) in der Zwischenschicht (210) zumindest teilweise entlang der Zwischenschicht (210) verläuft.

4. Vorrichtung (200) gemäß einem der vorangegangenen Ansprüche, bei der der zumindest eine erste Ausnehmungsabschnitt (225) in der ersten Verstärkungsschicht (220) entlang der Zwischenschicht (210) ausgeformt ist und der zumindest eine zweite Ausnehmungsabschnitt (235) in der zweiten Verstärkungsschicht (230) länglich entlang der Zwischenschicht (210) ausgeformt ist.

5. Vorrichtung (200) gemäß einem der vorangegangenen Ansprüche, bei der in der ersten Verstärkungsschicht (220) ein entlang der Zwischenschicht (210) mäanderförmiger, erster Ausnehmungsabschnitt (225) ausgeformt ist und in der zweiten Verstärkungsschicht (230) ein entlang der Zwischenschicht (210) mäanderförmiger, zweiter Ausnehmungsabschnitt (235) ausgeformt ist.

6. Vorrichtung gemäß einem der vorangegangenen Ansprüche,
wobei die Passivierungsschicht (220) aus Siliziumdioxid, Siliziumnitrid oder Siliziumcarbid gefertigt ist
und/oder
wobei die zweite Verstärkungsschicht (230) aus Silizium, Siliziumcarbid, Galliumarsenid oder Galliumnitrid gefertigt ist.

7. Vorrichtung (200) gemäß einem der vorangegangenen Ansprüche, bei der die Passivierungsschicht (220) gasdicht ausgeführt ist.

8. Vorrichtung (200) gemäß einem der vorangegangenen Ansprüche, mit einer Ätzstoppschicht (260), die außerhalb des zumindest einen zweiten Ausnehmungsabschnitts (235) an der zweiten Verstärkungsschicht (230) angeordnet ist.

9. Verfahren (400) zum Herstellen einer Vorrichtung (200) zum Erfassen eines Gases,
wobei die Vorrichtung (200) mittels mikrosystemtechnischer Halbleiterprozesse gefertigt ist.,
wobei das Verfahren (400) folgende Schritte aufweist:
Anordnen (410) einer ersten Verstärkungsschicht (220) in Gestalt einer Passivierungsschicht (220) auf Seiten einer ersten Hauptoberfläche einer Zwischenschicht (210) aus einem Festelektrolyten und einer zweiten Verstärkungsschicht (230) in Gestalt eines aus einem Halbleitermaterial ausgeformten Substrates (230) oder in Gestalt eines aus einem Halbleitermaterial ausgeformten Trägersubstrates auf Seiten einer von der ersten Hauptoberfläche abgewandten, zweiten Hauptoberfläche der Zwischenschicht (210);
Ausformen (420) zumindest eines ersten Ausnehmungsabschnitts (225) in der ersten Verstärkungsschicht (220) und zumindest eines zweiten Ausnehmungsabschnitts (235) in der zweiten Verstärkungsschicht (230), sodass der zumindest eine zweite Ausnehmungsabschnitt (235) entlang der Zwischenschicht (210) mindestens partiell versetzt von dem zumindest einen ersten Ausnehmungsabschnitt (225) der ersten Verstärkungsschicht (220) angeordnet ist; und
Aufbringen (430) zumindest einer Messelektrode (240) zum Erfassen des Gases in einem Messmedium (A) in dem zumindest einen ersten Ausnehmungsabschnitt (225) der ersten Verstärkungsschicht (220) dem Messmedium (A) zuwendbar an der Zwischenschicht (210) und zumindest einer Referenzelektrode (250) zum Erfassen des Gases in einem Referenzmedium (B) in dem zumindest einen zweiten Ausnehmungsabschnitt (235) der zweiten Verstärkungsschicht (230) dem Referenzmedium (B) zuwendbar an der Zwischenschicht (210).

10. Verfahren (400) gemäß Anspruch 9, bei dem im Schritt (420) des Ausformens der zumindest eine erste Ausnehmungsabschnitt (225) und/oder der zumindest eine zweite Ausnehmungsabschnitt (235) mittels eines Ätzprozesses ausgeformt werden, wobei der Ätzprozess insbesondere ein anisotroper Ätzprozess, ein anisotroper Trockenätzprozess, ein reaktiver Ionenätzprozess oder ein reaktiver lonentiefenätzprozess ist.

## Claims

1. Device (200) for sensing a gas, wherein the device (200) has the following features:
an intermediate layer (210) composed of a solid electrolyte, wherein the intermediate layer (210) has a first main surface and a second main surface facing away from the first main surface;
a first reinforcement layer (220) arranged on the first main surface of the intermediate layer (210), wherein at least one first cutout section (225) is shaped in the first reinforcement layer (220);
a second reinforcement layer (230) arranged on the second main surface of the intermediate layer (210), wherein at least one second cutout section (235) is shaped in the second reinforcement layer (230) and is arranged in a manner at least partially offset from the at least one first cutout section (225) of the first reinforcement layer (220) along the intermediate layer (210);
at least one measuring electrode (240) for sensing the gas in a measurement medium (A), wherein the at least one measuring electrode (240) is applied to the intermediate layer (210) in the at least one first cutout section (225) of the first reinforcement layer (220) in such a manner that said at least one measuring electrode (240) is able to be directed towards the measurement medium (A); and
at least one reference electrode (250) for sensing the gas in a reference medium (B), wherein the at least one reference electrode (250) is applied to the intermediate layer (210) in the at least one second cutout section (235) of the second reinforcement layer (230) in a manner such that said at least one reference electrode (250) is able to be directed towards the reference medium (B),
wherein the first reinforcement layer (220) is arranged in the form of a passivation layer (220) at the solid-electrolyte layer (210),
wherein the second reinforcement layer (230) is arranged in the form of a substrate (230) shaped from a semiconductor material or in the form of a carrier substrate shaped from a semiconductor material at the solid-electrolyte layer (210),
wherein the device (200) is fabricated by means of semiconductor processes appertaining to microsystems engineering.

2. Device (200) according to Claim 1, wherein the at least one measuring electrode (240) is arranged in relation to the intermediate layer (210) at least partially opposite a volume section of the second reinforcement layer (230) outside the at least one second cutout section (235), wherein the at least one reference electrode (250) is arranged in relation to the intermediate layer (210) at least partially opposite a volume section of the first reinforcement layer (220) outside the at least one first cutout section (225).

3. Device (200) according to either of the preceding claims, wherein an ion flow path between the at least one measuring electrode (240) and the at least one reference electrode (250) extends in the intermediate layer (210) at least partly along the intermediate layer (210).

4. Device (200) according to any of the preceding claims, wherein the at least one first cutout section (225) is shaped in the first reinforcement layer (220) along the intermediate layer (210) and the at least one second cutout section (235) is shaped in the second reinforcement layer (230) in elongate fashion along the intermediate layer (210).

5. Device (200) according to any of the preceding claims, wherein a first cutout section (225) shaped in meandering fashion along the intermediate layer (210) is shaped in the first reinforcement layer (220) and a second cutout section (235) shaped in meandering fashion along the intermediate layer (210) is shaped in the second reinforcement layer (230).

6. Device according to any of the preceding claims, wherein the passivation layer (220) is fabricated from silicon dioxide, silicon nitride or silicon carbide
and/or
wherein the second reinforcement layer (230) is fabricated from silicon, silicon carbide, gallium arsenide or gallium nitride.

7. Device (200) according to any of the preceding claims, wherein the passivation layer (220) is embodied in gastight fashion.

8. Device (200) according to any of the preceding claims, comprising an etch stop layer (260) arranged outside the at least one second cutout section (235) at the second reinforcement layer (230).

9. Method (400) for producing a device (200) for sensing a gas,
wherein the device (200) is fabricated by means of semiconductor processes appertaining to microsystems engineering,
wherein the method (400) has the following steps:
arranging (410) a first reinforcement layer (220) in the form of a passivation layer (220) on a first main surface of an intermediate layer (210) composed of a solid electrolyte and a second reinforcement layer (230) in the form of a substrate (230) shaped from a semiconductor material or in the form of a carrier substrate shaped from a semiconductor material on a second main surface of the intermediate layer (210), said second main surface facing away from the first main surface;
shaping (420) at least one first cutout section (225) in the first reinforcement layer (220) and at least one second cutout section (235) in the second reinforcement layer (230), such that the at least one second cutout section (235) is arranged in a manner at least partially offset from the at least one first cutout section (225) of the first reinforcement layer (220) along the intermediate layer (210); and
applying (430) at least one measuring electrode (240) for sensing the gas in a measurement medium (A) in the at least one first cutout section (225) of the first reinforcement layer (220) to the intermediate layer (210) in a manner such that said at least one measuring electrode is able to be directed towards the measurement medium (A), and at least one reference electrode (250) for sensing the gas in a reference medium (B) in the at least one second cutout section (235) of the second reinforcement layer (230) to the intermediate layer (210) in a manner such that said at least one reference electrode is able to be directed towards the reference medium (B).

10. Method (400) according to Claim 9, wherein, in the step (420) of shaping, the at least one first cutout section (225) and/or the at least one second cutout section (235) are/is shaped by means of an etching process, wherein the etching process is in particular an anisotropic etching process, an anisotropic dry etching process, a reactive ion etching process or a deep reactive ion etching process.

## Revendications

1. Dispositif (200) permettant de détecter un gaz, dans lequel le dispositif (200) présente les caractéristiques suivantes :
une couche intermédiaire (210) constituée d'un électrolyte solide, dans lequel la couche intermédiaire (210) présente une première surface principale et une seconde surface principale tournée à l'opposé de la première surface principale ;
une première couche de renforcement (220) qui est disposée sur le côté de la première surface principale de la couche intermédiaire (210), dans lequel au moins une première partie en creux (225) est formée dans la première couche de renforcement (220) ;
une seconde couche de renforcement (230) qui est disposée sur le côté de la seconde surface principale de la couche intermédiaire (210), dans lequel au moins une seconde partie en creux (235) est formée dans la seconde couche de renforcement (230) et est disposée le long de la couche intermédiaire (210) au moins en partie décalée par rapport à ladite au moins une première partie en creux (225) de la première couche de renforcement (220) ;
au moins une électrode de mesure (240) servant à détecter le gaz dans un fluide de mesure (A), dans lequel ladite au moins une électrode de mesure (240) est montée au niveau de la couche intermédiaire (210) dans ladite au moins une première partie en creux (225) de la première couche de renforcement (220), de manière à ce qu'elle puisse être orientée vers le fluide de mesure (A) ; et au moins une électrode de référence (250) servant à détecter le gaz dans un fluide de référence (B), dans lequel ladite au moins une électrode de référence (250) est montée au niveau de la couche intermédiaire (210) dans ladite au moins une seconde partie en creux (235) de la seconde couche de renforcement (230), de manière à ce qu'elle puisse être orientée vers le fluide de référence (B),
dans lequel la première couche de renforcement (220) est disposée au niveau de la couche d'électrolyte solide (210) sous la forme d'une couche de passivation (220), dans lequel la seconde couche de renforcement (230) est disposée au niveau de la couche d'électrolyte solide (210) sous la forme d'un substrat (230) constitué d'un matériau semi-conducteur ou sous la forme d'un substrat de support constitué d'un matériau semi-conducteur,
dans lequel le dispositif (200) est réalisé au moyen de processus pour semi-conducteurs de microsystèmes.

2. Dispositif (200) selon la revendication 1, dans lequel ladite au moins une électrode de mesure (240) est disposée au moins en partie en face d'une partie du volume de la seconde couche de renforcement (230), à l'extérieur de ladite au moins une seconde partie en creux (235), par rapport à la couche intermédiaire (210), dans lequel ladite au moins une électrode de référence (250) est disposée au moins en partie en face d'une partie du volume de la première couche de renforcement (220), à l'extérieur de ladite au moins une première partie en creux (225), par rapport à ladite couche intermédiaire (210).

3. Dispositif (200) selon l'une des revendications précédentes, **caractérisé en ce qu'**un trajet d'écoulement d'ions entre ladite au moins une électrode de mesure (240) et ladite au moins une électrode de référence (250) s'étend dans la couche intermédiaire (210) au moins en partie le long de la couche intermédiaire (210).

4. Dispositif (200) selon l'une des revendications précédentes, dans lequel ladite au moins une première partie en creux (225) est formée le long de la couche intermédiaire (210) dans la première couche de renforcement (220) et ladite au moins une seconde partie en creux (235) est formée longitudinalement le long de la couche intermédiaire (210) dans la seconde couche de renforcement (230).

5. Dispositif (200) selon l'une des revendications précédentes, dans lequel une première partie en creux sinueuse (225) est formée le long de la couche intermédiaire (210) dans la première couche de renforcement (220) et une seconde partie en creux sinueuse (235) est formée le long de la couche intermédiaire (210) dans la seconde couche de renforcement (230).

6. Dispositif selon l'une des revendications précédentes,
dans lequel la couche de passivation (220) est constituée de dioxyde de silicium, de nitrure de silicium ou de carbure de silicium
et/ou
dans lequel la seconde couche de renforcement (230) est constituée de silicium, de carbure de silicium, d'arséniure de gallium ou de nitrure de gallium.

7. Dispositif (200) selon l'une des revendications précédentes, dans lequel la couche de passivation (220) est étanche aux gaz.

8. Dispositif (200) selon l'une des revendications précédentes, comportant une couche d'arrêt de gravure (260) disposée à l'extérieur de ladite au moins une seconde partie en creux (235) au niveau de la seconde couche de renforcement (230).

9. Procédé (400) de fabrication d'un dispositif (200) permettant de détecter un gaz,
dans lequel le dispositif (200) est réalisé au moyen de processus pour semi-conducteurs de microsystèmes,
dans lequel procédé (400) comprend les étapes consistant à :
disposer (410) une première couche de renforcement (220) sous la forme d'une couche de passivation (220) sur le côté d'une première surface principale d'une couche intermédiaire (210) constituée d'un électrolyte solide et une seconde couche de renforcement (230) sous la forme d'un substrat (230) constitué d'un matériau semi-conducteur ou sous la forme d'un substrat de support constitué d'un matériau semi-conducteur sur le côté d'une seconde surface principale de la couche intermédiaire (210) tournée à l'opposée de la première surface principale ;
former (420) au moins une première partie en creux (225) dans la première couche de renforcement (220) et au moins une seconde partie en creux (235) dans la seconde couche de renforcement (230), de telle sorte que ladite au moins une seconde partie en creux (235) soit disposée le long de la couche intermédiaire (210) au moins en partie décalée par rapport à ladite au moins une première partie en creux (225) de la première couche de renforcement (220) ; et
monter (430), au niveau de la couche intermédiaire (210), au moins une électrode de mesure (240) servant à détecter le gaz dans un fluide de mesure (A) dans ladite au moins une première partie en creux (225) de la première couche de renforcement (220), de manière à ce qu'elle puisse être orientée vers le fluide de mesure (A) et, au niveau de la couche intermédiaire (210), au moins une électrode de référence (250) servant à détecter le gaz dans un fluide de référence (B) dans ladite au moins une seconde partie en creux (235) de la seconde couche de renforcement (230), de manière à ce qu'elle puisse être orientée vers le fluide de référence (B).

10. Procédé (400) selon la revendication 9, dans lequel, lors de l'étape (420) de formation, ladite au moins une première partie en creux (225) et/ou ladite au moins une seconde partie en creux (235) sont formées par un processus de gravure, dans lequel le processus de gravure est en particulier un processus de gravure anisotrope, un processus de gravure sèche anisotrope, un processus de gravure ionique réactive ou un processus de gravure ionique réactive profonde.
